# EUROPÄISCHE PATENTANMELDUNG

(11) **EP 3 299 687 A1**
(43) Veröffentlichungstag der Anmeldung: **28.03.2018**
(21) Anmeldenummer: 16189827.5
(22) Anmeldetag: 21.09.2016
(51) Int. Cl.: F16L 5/02, F16L 5/04, H02G 3/04, H02G 3/22, A62C 2/06

(54) **BRANDSCHUTZBAUGRUPPE FÜR EINE LEITUNGSDURCHFÜHRUNG SOWIE VERFAHREN ZUR HERSTELLUNG EINER BRANDGESCHÜTZTEN LEITUNGSDURCHFÜHRUNG**

(71) Anmelder: HILTI Aktiengesellschaft, 9494 Schaan (LI)
(72) Erfinder: Schulz-Hanke, Wolfgang, 86836 Untermeitingen (DE); Monden, Thomas, 87778 Stetten (DE); Münzenberger, Herbert, 65191 Wiesbaden (DE); Paetow, Mario, 86859 Igling (DE)
(74) Vertreter: Hilti Aktiengesellschaft Corporate Intellectual Property

(57) **Zusammenfassung**

Ein Brandschutzbaugruppe (10) für eine Leitungsdurchführung (11) durch eine Wand (12) ist beschrieben, mit einem Wandbefestigungsabschnitt (22), über den die Brandschutzbaugruppe (10) an der Wand (12) befestigbar ist, und einem schlauchförmigen, flexiblen und gasdichten Gewebeabschnitt (18), der derart ausgebildet ist, dass der Gewebeabschnitt (18) die durch die Wand (12) geführte Leitung (16) umschließt. Der Wandbefestigungsabschnitt (22) weist einen intumeszierenden Abschnitt (42) auf, der mit dem Gewebeabschnitt (18) direkt verbunden ist. Ferner ist ein Verfahren zur Herstellung einer brandgeschützten Leitungsdurchführung (11) beschrieben.

## Beschreibung

Die Erfindung betrifft eine Brandschutzbaugruppe für eine Leitungsdurchführung durch eine Wand sowie ein Verfahren zur Herstellung einer brandgeschützten Leitungsdurchführung durch eine Wand.

Aus dem Stand der Technik sind Brandschutzbaugruppen für eine Leitungsdurchführung durch eine Wand bekannt, bei denen zunächst eine Öffnung in eine Wand, beispielsweise eine Decke oder eine Seitenwand, eingebracht wird, um eine oder mehrere Leitung(en) durch die entsprechende Wand zu verlegen. Unter einer Leitung ist ein Kabel, ein Rohr oder Ähnliches zu verstehen. Da die Leitung die Öffnung in der Wand nicht vollständig schließt, wird im Stand der Technik üblicherweise ein flexibles oder starres Brandschutzmaterial verwendet, um die Öffnung im Bereich der Wand, durch die die Leitung geht, vollständig zu schließen. Hierzu werden unter anderem Mörtel, PU-Steine, Acryl-Dichtmittel und/oder Mineralwolle in Kombination mit Sprühbeschichtungen verwendet.

Es hat sich jedoch herausgestellt, dass beispielsweise im Falle eines Erdbebens starke mechanische Kräfte auf die Wand wirken, die aufgrund der aufgefüllten Öffnung auf die die Wand penetrierende Leitung übertragen werden. Hierdurch können Risse im Brandschutzmaterial entstehen, mit dem die Öffnung aufgefüllt worden ist, wodurch der Brandschutz nicht mehr in dem geforderten Maße sichergestellt ist, da beispielsweise toxische Gase oder Feuer durch die Risse im Brandschutzmaterial dringen können.

Sofern weiche Materialien als Brandschutzmaterial verwendet werden, kann es bei Erdbeben bzw. allgemein Erschütterungen dazu kommen, dass sich diese weichen Materialien von der die Wand penetrierenden Leitung lösen, wodurch ebenfalls die geforderte Dichtigkeit nicht mehr gewährleistet ist.

Ferner sind Brandschutzbaugruppen bekannt, die die Leitung im Wesentlichen schlauchförmig umschließen. Diese Baugruppen können die geforderte Dichtigkeit jedoch nur in komplexer Weise sicherstellen, da bei diesen Baugruppen beispielsweise ein Brandschutzdichtmaterial zwingend erforderlich ist. Darüber hinaus ist deren Befestigung an der Wand ungeeignet, um Erschütterungen standzuhalten, wie sie im Falle eines Erdbebens auftreten. Aufgrund der üblicherweise verwendeten starren Materialien kann es zu Brüchen und Rissen in der Brandschutzbaugruppe kommen, sodass die geforderte Dichtigkeit nicht mehr gewährleistet ist.

Die Aufgabe der Erfindung ist es, eine Brandschutzbaugruppe bereitzustellen, mit der es in einfacher Weise möglich ist, die geforderte Dichtigkeit auch bei Erschütterungen dauerhaft zu gewährleisten.

Die Aufgabe wird erfindungsgemäß durch eine Brandschutzbaugruppe für eine Leitungsdurchführung durch eine Wand gelöst, mit einem Wandbefestigungsabschnitt, über den die Brandschutzbaugruppe an der Wand befestigbar ist, und einem schlauchförmigen, flexiblen und gasdichten Gewebeabschnitt, der derartig ausgebildet ist, dass der Gewebeabschnitt die durch die Wand geführte Leitung umschließt, wobei der Wandbefestigungsabschnitt einen intumeszierenden Abschnitt aufweist, der mit dem Gewebeabschnitt direkt verbunden ist.

Der Grundgedanke der Erfindung ist es, dass die durch die Wand geführte Leitung nicht starr mit der Brandschutzbaugruppe verbunden ist, sodass eine relative Bewegung zwischen der Leitung im Falle eines Erdbebens und der Brandschutzbaugruppe möglich ist. Da der Gewebeabschnitt darüber hinaus flexibel ausgebildet ist, kann die Brandschutzbaugruppe gewissen Erschütterungen standhalten und entsprechenden Bewegungen der Wand folgen, ohne zu brechen oder einzureißen. Da der intumeszierende Abschnitt direkt mit dem gasdichten Gewebeabschnitt verbunden ist, ist die geforderte Gasdichtigkeit der Brandschutzbaugruppe gewährleistet. Der Gewebeabschnitt hat zudem einen hohen Feuerwiderstand, weswegen der Gewebeabschnitt auch im Brandfall gasdicht ist.

Ein Aspekt sieht vor, dass zusätzlich eine Silikonmasse im Verbindungsbereich des intumeszierenden Abschnitts und des Gewebeabschnitts vorgesehen ist. Die zusätzliche Silikonmasse verbessert die Gasdichtigkeit der Brandschutzbaugruppe im Verbindungsbereich zwischen dem Gewebeabschnitt und dem intumeszierenden Abschnitt, sodass kein toxisches Gas dort austreten kann.

Vorzugsweise ist der intumeszierende Abschnitt als innenliegende Einlage im Wandbefestigungsabschnitt angeordnet. Das intumeszierende Material des intumeszierenden Abschnitts bläht sich somit nach innen auf, sofern es bei einem Brandfall den hohen Temperaturen ausgesetzt ist. Das intumeszierende Material kann sich dabei so weit nach innen ausdehnen, dass es entweder die Öffnung in der angrenzenden Wand verschließt, durch die die Leitung geführt ist, und/oder den schlauchförmigen Gewebeabschnitt verschließt bzw. verstopft, sodass kein Gas und auch kein Feuer durch die Leitungsdurchführung gelangt.

Der Gewebeabschnitt kann aus einem Material bestehen, dass sich bei hohen Temperaturen zusammenzieht. Der Gewebeabschnitt, der die Leitung und das intumeszierende Material des intumeszierenden Abschnitts schlauchförmig umgibt, stellt demnach eine Art Schrumpfschlauch dar. Die Brandschutzbaugruppe verschließt so die Durchführung im Brandfall noch schneller, um einen Übertritt von Feuer und/oder toxischen Gasen zu verhindern.

Gemäß einem weiteren Aspekt weist der Wandbefestigungsabschnitt einen starren Abschnitt auf, an dem der intumeszierende Abschnitt angeordnet ist. Der starre Abschnitt dient zur Befestigung an der Wand und stellt sicher, dass die gesamte Brandschutzbaugruppe die benötigte Steifigkeit aufweist, um an der Wand sicher und dauerhaft befestigt zu werden.

Insbesondere stellen der starre Abschnitt und der flexible Gewebeabschnitt die zur Befestigung benötigte Steifigkeit sowie die gewünschte Flexibilität der Brandschutzbaugruppe sicher, sodass die mechanischen Belastungen bei einem Erdbeben keine Auswirkungen auf die Funktionsfähigkeit der Brandschutzbaugruppe haben.

Beispielsweise ist der starre Abschnitt aus mehreren starren Einzelgliedern gebildet, die relativ zueinander bewegbar angeordnet sind. Hierdurch kann der starre Abschnitt auf unterschiedliche Größen eingestellt werden, insbesondere unterschiedliche Querschnitte der Öffnung in der Wand. Der starre Abschnitt kann aufgrund der relativ zueinander bewegbaren Einzelglieder einen im Wesentlichen runden Querschnitt oder einen im Wesentlichen rechteckigen Querschnitt aufweisen, sofern dies gewünscht bzw. durch die Öffnung vorgegeben ist. Die Brandschutzbaugruppe ist somit flexibel einsetzbar.

Ein weiterer Aspekt sieht vor, dass der Wandbefestigungsabschnitt wenigstens ein Befestigungsteil aufweist, das zumindest teilweise flächig an der Wand anliegt, insbesondere wobei das Befestigungsteil ein im Wesentlichen rechtwinkliger Befestigungshaken ist. Die zumindest teilweise flächige Anlage des Befestigungsteils stellt sicher, dass die auftretenden mechanischen Kräfte verhältnismäßig großflächig in die Befestigungselemente eingeleitet werden, wodurch die Krafteinleitung homogener ist. Hierdurch ist eine dauerhafte und sichere Befestigung der Brandschutzbaugruppe gewährleistet.

Insbesondere steht das Befestigungsteil vom starren Abschnitt in der Befestigungsebene an der Wand im Wesentlichen radial ab. Hierdurch ist eine kompakte Befestigung der Brandschutzbaugruppe an der Wand möglich. Zusätzlich stützt das Befestigungsteil den starren Abschnitt ab.

Bei dem Befestigungsteil kann es sich um ein separates Element handeln, das mit dem starren Abschnitt verbunden wird. Alternativ kann das Befestigungsteil einstückig mit dem starren Abschnitt verbunden sein, insbesondere den Einzelgliedern.

Gemäß einem weiteren Aspekt ist der Wandbefestigungsabschnitt derart ausgebildet, dass zumindest zwischen einer Innenwandung des Wandbefestigungsabschnitts und der umschlossenen Leitung ein Freiraum ausgebildet ist, der eine relative Bewegung der Leitung ermöglicht. Die Brandschutzbaugruppe weist im Bereich des Wandbefestigungsabschnitts in einer zur Wand parallelen Ebene einen größeren Querschnitt als die Leitung auf, sodass in der entsprechenden Ebene ein im Wesentlichen ringförmiger Freiraum zwischen der Innenwandung des Wandbefestigungsabschnitts und der Leitung gebildet ist, die eine relative Schwingung der Leitung zur Brandschutzbaugruppe in Leitungsrichtung ermöglicht.

Insbesondere weist der Gewebeabschnitt ein Gewebematerial auf, das Aluminium, Aramid, Glasfaser, Silicafaser und/oder Keramikfaser aufweist, vorzugsweise ist der Gewebeabschnitt aus einem Silikon-Glasgewebe gebildet. Das Gewebematerial sorgt für die Temperatur- und Feuerbeständigkeit. Das Silikon stellt die geforderte Gasdichtigkeit sicher. Der Gewebeabschnitt ist trotz dieser Brandschutz-Eigenschaften flexibel, sodass er bei Schwingungen und Erschütterungen nicht einreißt. Es kann zudem Teflon (PTFE) oder ein anderes geeignetes Material alternativ oder ergänzend zum Silikon genutzt werden, um die Gasdichtigkeit bereitzustellen.

Ferner wird die Aufgabe erfindungsgemäß durch ein Verfahren zur Herstellung einer brandgeschützten Leitungsdurchführung durch eine Wand gelöst, insbesondere mit einer Brandschutzbaugruppe der zuvor genannten Art, wobei eine Öffnung in die Wand eingebracht wird. Es werden eine Leitung, die durch die Öffnung geführt werden soll, sowie eine Brandschutzbaugruppe bereitgestellt, die einen Wandbefestigungsabschnitt mit einem intumeszierenden Abschnitt und einen schlauchförmigen, flexiblen und gasdichten Gewebeabschnitt umfasst, der direkt mit dem intumeszierenden Abschnitt verbunden ist. Die Brandschutzbaugruppe wird über den Wandbefestigungsabschnitt an der Wand befestigt. Die Leitung wird durch die Brandschutzbaugruppe und die Öffnung geführt, wobei der Gewebeabschnitt der Brandschutzbaugruppe mit der Leitung verbunden wird.

Das erfindungsgemäße Verfahren stellt sicher, dass eine Leitungsdurchführung geschaffen wird, die die benötigte Gasdichtigkeit und Feuerfestigkeit auch im Falle eines Erdbebens bzw. danach sicherstellt, da die Brandschutzbaugruppe der Leitungsdurchführung den dabei entstehenden Erschütterungen standhält und den dabei auftretenden Schwingungen teilweise folgt. Die Brandschutzbaugruppe reißt dabei weder ein, noch muss die die Wand penetrierende Leitung der Bewegung der Wand und/oder der Brandschutzbaugruppe folgen. Zudem ist die Gasdichtigkeit der Brandschutzbaugruppe in einfacher Weise sichergestellt, da der verwendete Gewebeabschnitt bereits gasdicht ist.

Ein weiterer Aspekt sieht vor, dass die Leitung mit dem Gewebeabschnitt über ein mechanisches Fixierungselement, insbesondere eine Rohrschelle, und/oder eine chemische Verbindung, insbesondere ein Brandschutzdichtmaterial, verbunden wird. Das mechanische Fixierungselement und/oder die chemische Verbindung werden auf der vom Wandbefestigungsabschnitt entgegengesetzten Seite der Brandschutzbaugruppe angewendet, um das dem Wandbefestigungsabschnitt entgegengesetzte Ende des Gewebeabschnitts mit der Leitung gasdicht zu verbinden. Das mechanische Fixierungselement und/oder die chemische Verbindung sind dementsprechend auf der von der Wand, durch die die Leitung geführt ist, abgewandten Seite der Brandschutzbaugruppe vorgesehen, sodass die Bewegungen der Wand im Falle eines Erdbebens nicht oder stark gedämpft im Bereich des mechanischen Fixierungselements auf die Leitung übertragen werden.

Ferner kann im Fall von mehr als einer Leitung zwischen den einzelnen Leitungen ein Brandschutzdichtmaterial aufgebracht werden, um die Gasdichtigkeit der Brandschutzbaugruppe zu verbessern, insbesondere die Hohlräume zwischen den Leitungen abzudichten.

Ein Aspekt sieht vor, dass die Öffnung in der Wand einen größeren Querschnitt als die Leitung aufweist, wodurch sich die Leitung im Falle eines Erdbebens relativ zur Wand bzw. den die Öffnung begrenzenden Rand bewegen kann. Die Leitung kann demnach innerhalb der Öffnung schwingen.

Insbesondere bleibt die Öffnung in der Wand materialfrei. Die Öffnung wird gerade nicht mit einem intumeszierenden Material bzw. einem Brandschutzmaterial aufgefüllt, wie dies im Stand der Technik vorgesehen ist, um die Gasdichtigkeit sicherzustellen. Daher können auch keine Risse in einem derartigen Material auftreten, die die Gasdichtigkeit mindern würden.

Ein weiterer Aspekt sieht vor, dass die Leitung mit einem Gleitmittel versehen wird, sodass das Gleitmittel zwischen einer Außenfläche der Leitung und einer Kontaktfläche des Gewebeabschnitts vorgesehen ist und die Leitung leichter gleiten kann. Das Gleitmittel wird insbesondere im Bereich des mechanischen Fixierungsmittels aufgetragen, sodass das entsprechende Ende der Brandschutzbaugruppe gasdicht ist und dennoch eine relative Bewegung der Leitung zur Brandschutzbaugruppe zulässt, insbesondere in Längsrichtung der Brandschutzbaugruppe.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine perspektivische Ansicht einer erfindungsgemäßen Brandschutzbaugruppe, und
- Figur 2 eine schematische Schnittdarstellung durch die erfindungsgemäße Baugruppe.

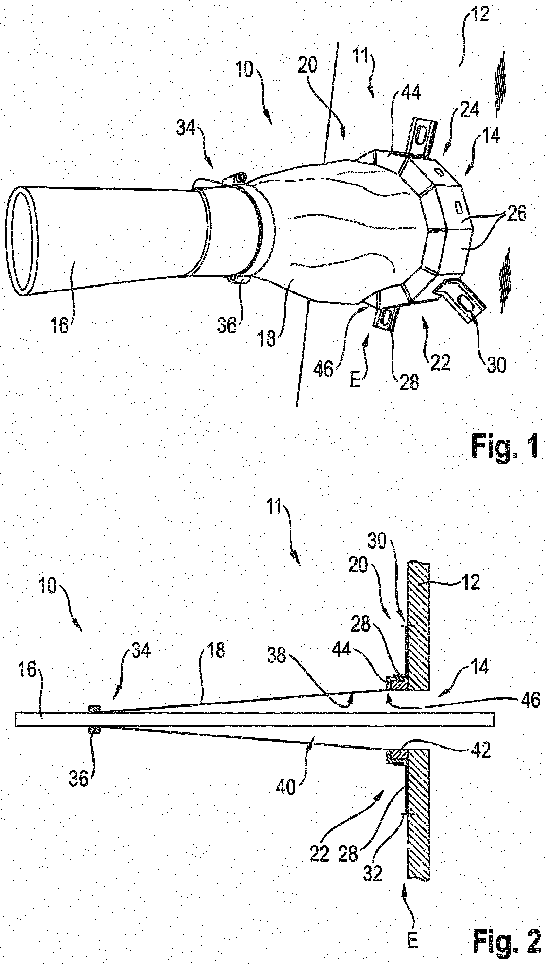

In den Figuren 1 und 2 ist eine Brandschutzbaugruppe 10 für eine Leitungsdurchführung 11 durch eine Wand 12 gezeigt, die eine Öffnung 14 aufweist, durch die eine Leitung 16 geführt ist.

Mit der Brandschutzbaugruppe 10 wird verhindert, dass toxische Gase und/oder Feuer im Brandfall von einer Seite der Wand 12 über die Leitungsdurchführung 11 auf die andere Seite der Wand 12 gelangen. Es wird also ein Übertritt des Brands von einem Raum zu einem anderen Raum verhindert, die durch die Wand 12 voneinander getrennt sind.

Die Brandschutzbaugruppe 10 umfasst einen schlauchförmigen Gewebeabschnitt 18, der gasdicht, flexibel und feuerfest ausgebildet ist, wobei der Gewebeabschnitt 18 die durch die Öffnung 14 geführte Leitung 16 umschließt.

Zudem weist die Brandschutzbaugruppe 10 an einem ersten Ende 20 einen Wandbefestigungsabschnitt 22 auf, über den die Brandschutzbaugruppe 10 an der Wand 12 befestigt ist.

In der gezeigten Ausführungsform umfasst der Wandbefestigungsabschnitt 22 einen starren Abschnitt 24, der als ein Kragen ausgebildet ist, welcher mehrere starre Einzelglieder 26 umfasst. Die Einzelglieder 26 können über Gelenke oder Biegebereiche relativ zueinander bewegbar sein (siehe insbesondere Figur 1). Hierdurch ist es möglich, die Form des starren Abschnitts 24, über den die Brandschutzbaugruppe 10 an der Wand 12 befestigt ist, in gewissen Grenzen zu verändern und an die Öffnung 14 in der Wand 12 anzupassen.

Am starren Abschnitt 24, insbesondere den Einzelgliedern 26, sind darüber hinaus Befestigungsteile 28 in Form von rechtwinkligen Befestigungshaken vorgesehen, über die sich die Brandschutzbaugruppe 10, insbesondere der Wandbefestigungsabschnitt 22, an der Wand 12 befestigen lässt.

Hierzu weisen die Befestigungsteile 28 jeweils zumindest eine Öffnung 30 auf (siehe Figur 1), durch die sich ein Befestigungselement 32 wie eine Schraube erstreckt (siehe Figur 2), um die Brandschutzbaugruppe 10 an der Wand 12 zu befestigen.

Wie aus der Figur 1 hervorgeht, sind die Befestigungsteile 28 im Wesentlichen gleichmäßig über den Umfang des starren Abschnitts 24 verteilt angeordnet, sodass die auf die Brandschutzbaugruppe 10 wirkenden Kräfte homogen verteilt werden. Dies erhöht die Stabilität der Befestigung der Brandschutzbaugruppe 10 an der Wand 12, insbesondere im Falle eines Erdbebens und den damit einhergehenden Erschütterungen der Wand 12.

Die Befestigungsteile 28 können in Bezug auf den starren Abschnitt 24 als separate Teile oder einstückig mit dem starren Abschnitt 24 zusammen ausgebildet sein, insbesondere mit den Einzelgliedern 26.

Da die Befestigungsteile 28 rechtwinklig ausgebildet sind, ist sichergestellt, dass die Befestigungsteile 28 zumindest teilweise im Wesentlichen radial vom starren Abschnitt 24 in einer Befestigungsebene E abstehen, die der Oberfläche der Wand 12 entspricht. Die Befestigungsteile 28 liegen in der Befestigungsebene E zumindest teilweise flächig an der Wand 12 an, wodurch eine kompakte Befestigung der Brandschutzbaugruppe 10 an der Wand 12 erreicht wird.

Darüber hinaus weist die Brandschutzbaugruppe 10 in der gezeigten Ausführungsform an einem zweiten Ende 34, das zum ersten Ende 20 entgegengesetzt ist, ein mechanisches Fixierungselement 36 in Form einer Rohrschelle auf, über die der Gewebeabschnitt 18 an der Leitung 16 gasdicht befestigt ist.

Alternativ oder ergänzend kann eine chemische Verbindung vorgesehen sein, um den Gewebeabschnitt 18 im Bereich des zweiten Endes 34 mit der Leitung 16 gasdicht zu koppeln, beispielsweise ein Brandschutzdichtmaterial.

Das Brandschutzdichtmaterial kann insbesondere zwischen einzelnen Leitungen vorgesehen sein, sofern mehrere Leitungen durch die Öffnung 14 geführt werden. Dadurch werden die Hohlräume zwischen den einzelnen Leitungen abgedichtet.

Zudem ist in der gezeigten Ausführungsform ein Gleitmittel auf der Außenfläche der Leitung 16 im Bereich des zweiten Endes 34 aufgebracht, was entsprechend zwischen der Außenfläche und einer Kontaktfläche des Gewebeabschnitts 18 wirkt. Das Gleitmittel stellt sicher, dass sich die Leitung 16 in Längsrichtung bzw. in axialer Richtung, also in Leitungsrichtung, relativ zur Befestigungsbaugruppe 10 bewegen kann. Die Leitung 16 ist somit nicht in alle Bewegungsrichtungen am zweiten Ende 34 mit dem Gewebeabschnitt 18 über das Fixierungselement 36 fixiert. Das Fixierungselement 36 und das Gleitmittel stellen lediglich die benötigte Gasdichtigkeit im Brandfall sicher. Bei dem Gleitmittel kann es sich um ein Schmiermittel handeln, beispielsweise ein Fett.

Insbesondere aus Figur 2 geht hervor, dass zwischen einer Innenwandung 38 des Wandbefestigungsabschnitts 22 bzw. dem Gewebeabschnitt 18 sowie der vom Gewebeabschnitt 18 umschlossenen Leitung 16 ein Freiraum 40 ausgebildet ist, der gewährleistet, dass sich die Leitung 16 auch in radialer Richtung relativ zur Brandschutzbaugruppe 10 bewegen kann.

Bei einem Erdbeben ist so sichergestellt, dass eine relative Bewegung der Leitung 16 zur Brandschutzbaugruppe 10 in sämtlichen Richtungen zumindest in bestimmten Grenzen möglich ist.

Der schlauchförmige Gewebeabschnitt 18 erstreckt sich im Wesentlichen konisch zulaufend vom ersten Ende 20 zum zweiten Ende 34, sodass der Querschnitt des Freiraums 40, in dieser Richtung gesehen, ebenfalls kleiner wird.

Darüber hinaus geht aus Figur 2 hervor, dass die Öffnung 14 in der Wand 12 einen größeren Durchmesser als die Leitung 16 selbst hat, wodurch sichergestellt ist, dass sich die Leitung 16 relativ zur Wand 12 bewegen kann. Dies liegt auch daran, dass die Öffnung 14 nicht mit einem Brandschutzmaterial oder einem intumeszierenden Material aufgefüllt worden ist, wie dies ansonsten üblich ist.

Die Brandschutzbaugruppe 10 weist zudem einen intumeszierenden Abschnitt 42 auf, der aus einem intumeszierenden Material besteht und in der gezeigten Ausführungsform als innenliegende Einlage am Wandbefestigungsabschnitt 22 angeordnet ist, insbesondere am starren Abschnitt 24 (siehe Figur 2).

Der intumeszierenden Abschnitt 42 ist direkt mit dem Gewebeabschnitt 18 befestigt, wodurch die geforderte Gasdichtigkeit der gesamten Brandschutzbaugruppe 10 sichergestellt ist.

Im gezeigten Ausführungsbeispiel ist das Gewebematerial des Gewebeabschnitts 18 zwischen einer Seite des intumeszierenden Abschnitts 42 und einer gegenüberliegenden Seite des starren Abschnitts 24 des Wandbefestigungsabschnitts 22 angeordnet, insbesondere einer laschenartigen Abkantung 44 des Wandbefestigungsabschnitts 22 (siehe auch Figur 1). Die Abkantung 44 umgreift demnach den intumeszierenden Abschnitt 42 und das daran befestigte Gewebematerial des Gewebeabschnitts 18 zumindest teilweise.

Das Gewebematerial des Gewebeabschnitts 18 kann zwischen der Abkantung 44 und dem als innenliegende Einlage ausgebildeten intumeszierenden Abschnitt 42 geklemmt sein.

Alternativ oder ergänzend ist das Gewebematerial des Gewebeabschnitts 18 am intumeszierenden Abschnitt 42 chemisch oder mechanisch befestigt, beispielsweise geklebt.

Zur Verbesserung der Gasdichtigkeit der Brandschutzbaugruppe 10 ist eine zusätzliche Silikonmasse im Verbindungsbereich 46 des starren Abschnitts 24 und des Gewebeabschnitts 18 vorgesehen.

Der Gewebeabschnitt 18 ist, wie bereits beschrieben, flexibel, gasdicht und feuerfest. Um diese Eigenschaften zu gewährleisten, weist der Gewebeabschnitt 18 ein Gebematerial auf, beispielsweise ein Silikon-Glasgewebe, bzw. ist der Gewebeabschnitt 18 aus diesem gebildet. Alternativ oder ergänzend kann der Gewebeabschnitt Aluminium und/oder ein Gewebe mit Aramid-, Silica- oder Keramikfasern umfassen. Anstelle des Silikons kann Teflon (PTFE) oder ein anderes geeignetes Material genutzt werden, um die Gasdichtigkeit bereitzustellen. Dieses Material kann auch ergänzend zum Silikon verwendet werden.

Sofern ein Brand auf der in Figur 2 rechten Seite der Wand 12 ausbricht, bläht sich das intumeszierende Material des intumeszierenden Abschnitts 42 aufgrund der steigenden Temperatur auf. Dabei wird die Brandschutzbaugruppe 10, insbesondere der schlauchförmige Gewebeabschnitt 18, und/oder die Öffnung 14 in der Wand 12, durch die die Leitung 16 geführt ist, vom aufgeblähten intumeszierende Material verschlossen.

Sofern der Brand auf der entgegengesetzten Seite, also in Figur 2 auf der linken Seite ausbricht, zieht sich der Gewebeabschnitt 18 vorzugsweise in analoger Weise zu einem Schrumpfschlauch zunächst zusammen, um die Leitung 16 eng zu umschließen. Die Gasdichtigkeit der Leitungsdurchführung 11 ist so gewährleistet. Sobald die Temperatur im Bereich der ersten, wandnahen Seite 20 auf eine vorbestimmte Temperatur ansteigt, bläht sich das intumeszierende Material auf, sodass die Öffnung 14 und/oder der schlauchförmige Gewebeabschnitt 18 verschlossen werden.

Weder Feuer noch toxische Gase können so von einer Seite der Wand 12 auf die andere Seite der Wand 12 durch die Leitungsdurchführung 11 übertreten, insbesondere nicht durch die Öffnung 14, unabhängig davon, auf welcher Seite der Brand ausbricht.

Zur Herstellung der brandgeschützten Leitungsdurchführung 11 wird zunächst die Öffnung 14 in die Wand 12 eingebracht, durch die anschließend die Leitung 16 gelegt werden soll.

Die Brandschutzbaugruppe 10 wird dann über ihren Wandbefestigungsabschnitt 22 an der Wand 12 im Bereich der Öffnung 14 befestigt. Hierzu wird die Brandschutzbaugruppe 10 über ihre Befestigungsteile 28 an die Wand 12 geschraubt, wozu Befestigungselemente 32 wie Schrauben durch die in den Befestigungsteilen 28 vorgesehenen Öffnungen 30 geführt und in der Wand 12 befestigt werden.

Anschließend wird die durch die Wand 12 zu führende Leitung 16 durch die Brandschutzbaugruppe 10 und die Öffnung 14 geführt, wonach der Gewebeabschnitt 18 über sein zweites Ende 34 mit der Leitung 16 verbunden wird, beispielsweise über das mechanische Fixierungselement 36 wie der Rohrschelle. Zusätzlich oder alternativ kann die chemische Verbindung in Form eines Brandschutzdichtmaterials aufgebracht werden.

Da die Öffnung 14 in der Wand 12 bei der Herstellung der brandgeschützten Leitungsdurchführung 11 mittels der Brandschutzbaugruppe 10 materialfrei bleibt, ist sichergestellt, dass keine Einrisse oder Beschädigungen des intumeszierenden Materials bzw. des Brandschutzmaterials im Falle eines Erdbebens auftreten. Dementsprechend lässt sich die geforderte Gasdichtigkeit der Brandschutzbaugruppe 10 während eines Erdbebens und nach einem Erdbeben gewährleisten.

Die Leitung 16 kann sich sowohl frei in der Öffnung 14 der Wand 12 als auch relativ zur Brandschutzbaugruppe 10 innerhalb des flexiblen Gewebeabschnitts 18 bewegen.

Generell lässt sich der starre Abschnitt 24 öffnen und schließen, sodass die Brandschutzbaugruppe 10 auch nachträglich um eine bereits verlegte Leitung 16 gelegt werden kann.

Entsprechend wird der Gewebeabschnitt 18 auf die richtigen Maße abgelängt, sodass der Gewebeabschnitt 18 zunächst als Matte vorliegt. Dann wird der mattenförmige Gewebeabschnitt 18 über eine Kante mit dem starren Abschnitt 24 im geöffneten Zustand verbunden, insbesondere dem intumeszierenden Abschnitt 42 des starren Abschnitts 24. Anschließend wird der Gewebeabschnitt 18 mit dem starren Abschnitt 24 um die bereits verlegte Leitung 16 gelegt und verschlossen.

Die beim Ablängen entstandenen Ränder des Gewebeabschnitt 18 werden hierzu miteinander verbunden, um den Schlauch auszubilden.

Alternativ kann auch zunächst der abgelängte Gewebeabschnitt 18, der mattenförmig ist, um die bereits verlegte Leitung 16 gelegt und dessen Ränder verschlossen werden, wonach der schlauchförmige Gewebeabschnitt 18 anschließend mit dem starren Abschnitt 24 verbunden wird, insbesondere mit dessen intumeszierenden Abschnitt 42.

Die Gasdichtigkeit, der Feuerwiderstand sowie die intumeszierenden Eigenschaften der Brandschutzbaugruppe 10 sind demnach in kostengünstiger Weise sichergestellt, wobei die Brandschutzbaugruppe 10 auch noch bei bzw. nach einem Erdbeben voll funktionsfähig ist.

## Patentansprüche

1. Brandschutzbaugruppe (10) für eine Leitungsdurchführung (11) durch eine Wand (12), mit einem Wandbefestigungsabschnitt (22), über den die Brandschutzbaugruppe (10) an der Wand (12) befestigbar ist, und einem schlauchförmigen, flexiblen und gasdichten Gewebeabschnitt (18), der derart ausgebildet ist, dass der Gewebeabschnitt (18) die durch die Wand (12) geführte Leitung (16) umschließt, wobei der Wandbefestigungsabschnitt (22) einen intumeszierenden Abschnitt (42) aufweist, der mit dem Gewebeabschnitt (18) direkt verbunden ist.

2. Brandschutzbaugruppe (10) nach Anspruch 1, **dadurch gekennzeichnet, dass** zusätzlich eine Silikonmasse im Verbindungsbereich (46) des intumeszierenden Abschnitts (42) und des Gewebeabschnitts (18) vorgesehen ist.

3. Brandschutzbaugruppe (10) nach Anspruch 1 oder 2, **dadurch gekennzeichnet, dass** der intumeszierende Abschnitt (42) als innenliegende Einlage im Wandbefestigungsabschnitt (22) angeordnet ist.

4. Brandschutzbaugruppe (10) nach einem der vorhergehenden Ansprüche, **dadurch gekennzeichnet, dass** der Wandbefestigungsabschnitt (22) einen starren Abschnitt (24) aufweist, an dem der intumeszierende Abschnitt (42) angeordnet ist.

5. Brandschutzbaugruppe (10) nach Anspruch 4, **dadurch gekennzeichnet, dass** der starre Abschnitt (24) aus mehreren starren Einzelgliedern (26) gebildet ist, die relativ zueinander bewegbar angeordnet sind.

6. Brandschutzbaugruppe (10) nach einem der vorhergehenden Ansprüche, **dadurch gekennzeichnet, dass** der Wandbefestigungsabschnitt (22) wenigstens ein Befestigungsteil (28) aufweist, das zumindest teilweise flächig an der Wand (12) anliegt, insbesondere wobei das Befestigungsteil (28) ein im Wesentlichen rechtwinkliger Befestigungshaken ist.

7. Brandschutzbaugruppe (10) nach Anspruch 6, **dadurch gekennzeichnet, dass** das Befestigungsteil (28) vom starrem Abschnitt (24) in der Befestigungsebene (E) an der Wand (12) im Wesentlichen radial absteht.

8. Brandschutzbaugruppe (10) nach einem der vorhergehenden Ansprüche, **dadurch gekennzeichnet, dass** der Wandbefestigungsabschnitt (22) derart ausgebildet ist, dass zumindest zwischen einer Innenwandung (38) des Wandbefestigungsabschnitts (22) und der umschlossenen Leitung (16) ein Freiraum (40) ausgebildet ist, der eine relative Bewegung der Leitung (16) ermöglicht.

9. Brandschutzbaugruppe (10) nach einem der vorhergehenden Ansprüche, **dadurch gekennzeichnet, dass** der Gewebeabschnitt (18) ein Gewebematerial aufweist, das Aluminium, Aramid, Glasfaser, Silicafaser und/oder Keramikfaser aufweist, insbesondere aus einem Silikon-Glasgewebe besteht.

10. Verfahren zur Herstellung einer brandgeschützten Leitungsdurchführung (11) durch eine Wand (12), insbesondere mit einer Brandschutzbaugruppe (10) nach einem der vorhergehenden Ansprüche, mit den folgenden Schritten:
a) eine Öffnung (14) wird in die Wand (12) eingebracht,
b) eine Leitung (16) wird bereitgestellt, die durch die Öffnung (14) geführt werden soll,
c) eine Brandschutzbaugruppe (10) wird bereitgestellt, die einen Wandbefestigungsabschnitt (22) mit einem intumeszierenden Abschnitt (42) und einen schlauchförmigen, flexiblen und gasdichten Gewebeabschnitt (18) umfasst, der direkt mit dem intumeszierenden Abschnitt (42) verbunden ist,
d) die Brandschutzbaugruppe (10) wird über den Wandbefestigungsabschnitt (22) an der Wand (12) befestigt,
e) die Leitung (16) wird durch die Brandschutzbaugruppe (10) und die Öffnung (14) geführt, und
f) der Gewebeabschnitt (18) der Brandschutzbaugruppe (10) wird mit der Leitung (16) verbunden.

11. Verfahren nach Anspruch 10, **dadurch gekennzeichnet, dass** die Leitung (16) mit dem Gewebeabschnitt (18) über ein mechanisches Fixierungselement (36), insbesondere eine Rohrschelle, und/oder eine chemische Verbindung, insbesondere ein Brandschutzdichtmaterial, verbunden wird.

12. Verfahren nach Anspruch 10 oder 11, **dadurch gekennzeichnet, dass** die Öffnung (14) in der Wand (12) einen größeren Querschnitt als die Leitung (16) aufweist.

13. Verfahren nach einem der Ansprüche 10 bis 12, **dadurch gekennzeichnet, dass** die Öffnung (14) in der Wand (12) materialfrei bleibt.

14. Verfahren nach einem der Ansprüche 10 bis 13, **dadurch gekennzeichnet, dass** die Leitung (16) mit einem Gleitmittel versehen wird, sodass das Gleitmittel zwischen einer Außenfläche der Leitung (16) und einer Kontaktfläche des Gewebeabschnitts (18) vorgesehen ist und die Leitung (16) leichter gleiten kann.

15. Verfahren nach einem der Ansprüche 10 bis 14, **dadurch gekennzeichnet, dass** der Gewebeabschnitt (18) ein Gewebematerial aufweist, das Aluminium, Aramid, Glasfaser, Silicafaser und/oder Keramikfaser aufweist, insbesondere aus dem Silikon-Glasgewebe gebildet ist.
